(19)

Europäisches
Patentamt
European
Patent Office
Office européen
des brevets

(11)    EP 3 726 529 A1

(12)    EUROPEAN PATENT APPLICATION

(43) Date of publication:
21.10.2020   Bulletin 2020/43

(51) Int Cl.:
$G10L\ 21/0272$ $^{(2013.01)}$    $G10L\ 25/30$ $^{(2013.01)}$

(21) Application number: 19169585.7

(22) Date of filing: 16.04.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicants:
• Fraunhofer-Gesellschaft zur Förderung der
angewandten Forschung e.V.
80686 München (DE)
• Friedrich-Alexander-Universität
Erlangen-Nürnberg
91054 Erlangen (DE)

(72) Inventors:
• HABETS, Emanuel
91058 Erlangen (DE)
• MACK, Wolfgang
91058 Erlangen (DE)

(74) Representative: Pfitzner, Hannes et al
Schoppe, Zimmermann, Stöckeler
Zinkler, Schenk & Partner mbB
Patentanwälte
Radlkoferstraße 2
81373 München (DE)

(54)    **METHOD AND APPARATUS FOR DETERMINING A DEEP FILTER**

(57)    A method for determining a deep filter comprises
the following steps:
• receiving a mixture;
• estimating using a deep neural network the deep filter,
wherein the estimating is performed, such that the deep
filter, when applying to elements of the mixture, obtains
estimates of respective elements of the desired repre-
sentation;
wherein the deep filter of at least one dimension comprises a tensor with elements.

Fig. 2a

EP 3 726 529 A1

**Description**

Embodiments of the present invention refer to a method and an apparatus for determining a deep filter. Further embodiments refer to the use of the method for signal extraction, signal separation or signal reconstruction.

When a signal is captured by sensors, it usually contains desired and undesired components. Consider speech (desired) in a noisy environment with additional interfering speakers or directional noise sources (undesired). Extracting the desired speech from the mixture is required to obtain high-quality noise-free recordings and can be beneficial for perceived speech quality e.g. in teleconferencing systems or mobile communication. Considering a different scenario in an electrocardiogram, electromyogram or electroencephalogram where biomedical signals are captured by sensors, also interference or noise have to be cancelled to enable optimal interpretation and further processing of the captured signals e.g. by medical doctors. In general, extracting a desired signal from a mixture or separating multiple desired signals in a mixture is desirable in a multitude of different scenarios.

Beside extraction and separation, there are scenarios where parts of the captured signal are not accessible any more. Given a transmission scenario where some packages have been lost or an audio recording where room acoustics cause spatial comb filters and lead to cancellation/destruction of specific frequencies. Assuming there is information in the remaining parts of the signal about the content of the lost parts, reconstructing the missing signal parts is also highly desirable in a multitude of different scenarios.

Below, current signal extraction and separation approaches will be discussed:
Given an adequate estimate of the desired and undesired signal statistics, traditional methods, like Wiener filtering, apply a real-valued gain to the complex mixture short-time Fourier transform (STFT) representation to extract a desired signal from a mixture [e.g. [01], [02]].

Another possibility is to estimate from the statistics a complex valued multi-dimensional filter in STFT domain for each mixture time-frequency bin and apply it to perform extraction. For a separation scenario, each desired signal needs its own filters [02].

Statistical based methods perform well given stationary signals, however, statistics estimation is often challenging given highly non-stationary signals.

Another approach is to use non-negative matrix factorization (NMF). It learns in an unsupervised fashion from provided training data basis vectors of the data which can be recognized during testing [e.g. [03], [04]]. Given speech has to be separated from white noise, an NMF learns the most prominent basis vectors in the training examples. As white noise is temporally uncorrelated those vectors belong to speech. During test, it can be determined whether one of the basis vectors is currently active to perform extraction.

Speech signals from different speakers are very different, approximating all possible speech signals by a limited number of basis vectors does not meet this high variance in the desired data. Also, if the noise is highly non-stationary and unknown during training, not like white noise, the basis vectors could cover noise segments which reduces extraction performance.

In recent years, especially deep-learning based time-frequency masking techniques showed major improvements with respect to performance [e.g. [05]]. Given labeled training data, a deep neural network (DNN) is trained to estimate a time-frequency mask. This mask is element-wise applied to the complex mixture STFT to perform signal extraction or in the case if multiple masks signal separation. The mask elements can be binary given a mixture time-frequency bin is solely dominated by a single source [e.g. [06]]. The mask elements can also be real-valued ratios [e.g. [07]] or complex-valued ratios [e.g. [08]] given multiple active sources per time-frequency bin.

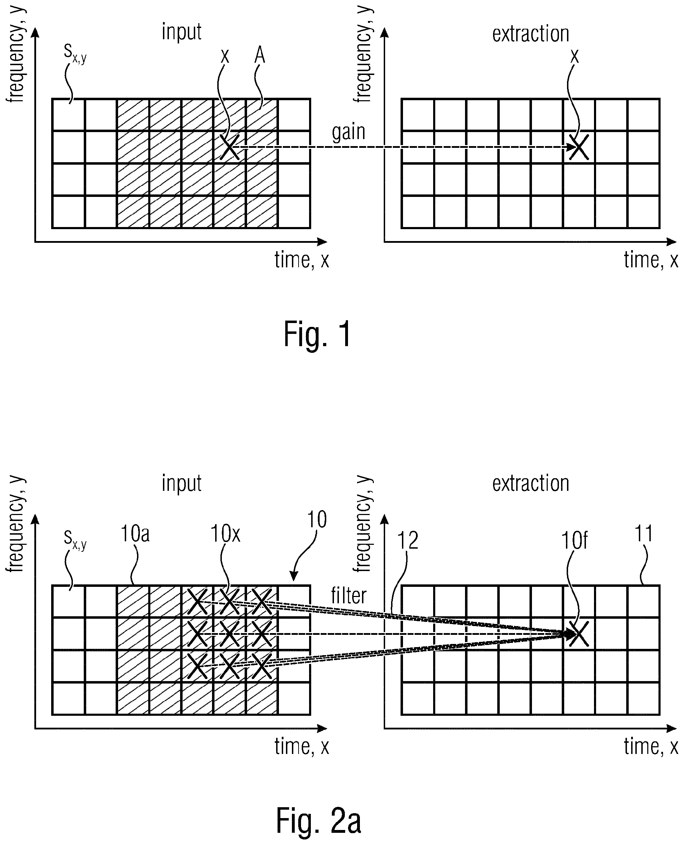

This extraction is shown by Fig. 1. Fig. 1 shows two frequency/time diagrams for a plurality of bins $s_{x,y}$. The bins are the input STFT, wherein the area marked by the A of the input STFT is given to the DNN to estimate a gain for each time frequency bin in it. This gain is applied to the complex input STFT, in an element-wise manner (cf. the bin marked by the x within the input as well as within the extraction diagram). This has the purpose to estimate the respective desired component.

Given a mixture time-frequency bin is zero due to destructive interference of the desired and undesired signals, masks cannot reconstruct the desired signals by applying a gain solely to this bin as the respective mask value does not exist. Even if a mixture time-frequency bin is close to zero due to destructive interference of the desired and undesired signals, masks usually cannot completely reconstruct the desired signals by applying a gain solely to this bin as the respective mask are usually bound in magnitude which limits their performance given destructive interference in specific time-frequency bins. Furthermore, given parts of the signal are lost, masks cannot reconstruct these parts as they solely apply a gain to the time-frequency bin to estimate the desired signal.

Therefore there is a need for an improved approach.

It is an objective of the present invention to provide an improved approach for signal extraction, separation and reconstruction.

This object is solved by the subject-matter of the independent claims.

An embodiment of the present invention provides a method for determining a deep filter of at least one dimension.

The method comprises the steps of receiving a mixture, estimating using a deep neural network the deep filter wherein the estimating is performed, such that the deep filter, when applied to elements of the mixture, obtains an estimate of respective elements of the desired representation. Here, the deep filter of the at least one dimension comprises a tensor with elements.

The invention is based on the finding that the combination of the concept of complex time-frequency filters from the statistical method parts with deep neural networks enables to extract/separate/reconstruct desired values from a multi-dimensional tensor (assuming the multi-dimensional tensor is the input representation). This general framework is called deep filter being based on distorted / noise input signals processed by use of a neural network (which can be trained using a cost function and training data). For example, the tensor can be, a one dimensional or two dimensional complex STFT or also STFT with an additional sensor dimension, but is not limited to those scenarios. Here, the deep neural network is directly used to estimate for each the equated tensor element (A) one dimensional or even multi-dimensional (complex) deep filter. Those filters are applied to defined areas of the degraded tensor to obtain estimates of the desired values in the enhanced tensor. In this way, it is possible to overcome the problem of masks with destructive interference due to their bounded values by incorporating several tensor values for their estimate. Due to the usage of the DNNs it is also possible to overcome the statistics estimation for the time frequency filters.

According to an embodiment, the mixture may comprise a real- or complex-valued time frequency representation (like a short-time Fourier transform) or a feature representation of it. Here, the desired representation comprises a desired real- or complex-valued time frequency representation or feature representation of it as well. According to embodiments, the consequence may be, that the deep filter also comprises a real- or complex-valued time-frequency filter. In this case, it is an option that one dimension of the deep filter is described in a short-time Fourier transform domain.

Furthermore, the at least one dimension may be out of a group comprising time-dimension, frequency-dimension or sensor-signal-dimension. According to further embodiments, the estimation is performed for each element of the mixture or for a predetermined portion of the elements of the mixture or for a predetermined portion of the tensor elements of the mixture. This estimation may be - according to embodiments - performed for one or more, like at least two sources.

Regarding the definition of the filter it should be noted that the method may, according to embodiments, comprise the step of defining a filter structure with its filter variables for the deep filter of at least one dimension. This step may stay in connection with the embodiment according to which the deep neural network comprises a number of output parameters, wherein the number of output parameters may be equal to the number of filter values for a filter function of the deep filter. Note, that the number of trainable parameters is typically much larger, wherein it is beneficial to define the number of outputs equal to the number of real plus imaginary filter components. According to embodiments, the deep neural network comprises a batch-normalization layer, a bidirectional long short-term memory layer, a feed-forward output layer, a feed-forward output layer with a tanh activation and/or one or more additional layers. As indicated above, this deep neural network may be trained. Therefore, the method comprises, according to embodiments, the step of training the deep neural network. This step may be performed by the sub-step of training using the mean-squared error (MSE) between a ground truth and the desired representation and an estimate of the desired representation. Note an exemplary approach for the training procedure is minimizing the mean-squared error during training of the DNN. Alternatively, the deep neural network may be trained by reducing the reconstruction error between the desired representation and an estimate of the desired representation. According to a further embodiment, the training is performed by a magnitude reconstruction.

According to an embodiment, the estimating may be performed by use of the formula

$$\hat{X}_d(n,k) = \sum_{i=-I}^{I} \sum_{l=-L}^{L} H_{n,k}^*(l+L, i+I) \cdot X(n-l, k-i)$$

wherein $2 \cdot L + 1$ is a filter dimension in the time-frame direction and $2 \cdot I + 1$ is a filter dimension in a frequency direction and $H_{n,k}^*$ is the complex conjugated 2D filter. Just for the sake of completeness it should be noted that the above formula $\sum_{i=-I}^{I} \sum_{l=-L}^{L} H_{n,k}^*(l+L, i+$ $_I) \cdot X(n-l, k-i)$ represents what should be performed in the "applying step".

Starting from this formula, the training may be performed by use of the following formula,

$$J_R = \frac{1}{N \cdot K} \sum_{k=1}^{K} \sum_{n=1}^{N} \left| \left( X_d(n,k) - \hat{X}_d(n,k) \right)^2 \right| ,$$

wherein $X_d(n, k)$ is the desired representation and $\hat{X}_d(n,k)$ the estimated desired representation, or

by use of the following formula:

$$J_{MR} = \frac{1}{N \cdot K} \sum_{k=1}^{K} \sum_{n=1}^{N} (|X_d(n,k)| - |\hat{X}_d(n,k)|^2|,$$

wherein $X_d(n, k)$ is the desired representation and $\hat{X}_d(n, k)$ is the estimated desired representation.

According to embodiments, the elements of the deep filter are bounded in magnitude or bounded in magnitude by use of the following formula,

$$|H_{n,k}^*(l + L, i + I)| \le b \,\forall l, i \in [-L, L], [-I, I],$$

wherein $H_{n,k}^*$ is a complex conjugated 2D filter. Note, that in the preferred embodiment the bounding is due to the tanh activiation function of the DNN output layer.

Another embodiment provides a method for filtering. This method comprises a basic as well as the optional steps of the above-described method for determining a deep filter and the step of applying the deep filter to the mixture. Here it should be noted that according to embodiments, the step of applying is performed by element-wise multiplication and consecutive summing up to obtain an estimate of the desired representation.

According to a further embodiment this filtering method may be used for signal extraction and/or for signal separation of at least two sources. Another application according to a further embodiment is that this method may be used for signal reconstruction. Typical signal reconstruction applications are packet loss concealment and bandwidth extension.

It should be noted that the method for filtering, as well as the method for signal extraction/signal separation and signal reconstruction can be performed by use of a computer. This holds true for the method for determining a deep-filter of at least one dimension. This means that a further embodiment provides a computer program having a program code for performing, when running on a computer, one of the above-described methods.

Another embodiment provides an apparatus for determining a deep filter. The apparatus comprises an input for receiving a mixture;
a deep neural network for estimating the deep filter such that the deep filter, when applied to elements of the mixture, obtains estimates of respective elements of the desired representation. Here, the filter comprises a tensor (with elements) of at least one dimension.

According to another embodiment, an apparatus is provided enabling to filter a mixture. This apparatus comprises a deep filter as defined above which is applied to the mixture. This apparatus can be enhanced, such that same enables signal extraction/signal separation/signal reconstruction.

Embodiments of the present invention will subsequently be discussed referring to the enclosed figures, wherein

Fig. 1          schematically shows a diagram (frequency-time diagram) representing a mixture as input together with a diagram representing the extraction in order to illustrate the principle for generating/determining a filter according to a conventional approach;

Fig. 2a        schematically shows an input diagram (frequency-time diagram) and an extraction diagram (frequency-time diagram) for illustrating the principle of estimating a filter according to an embodiment of the present invention;

Fig. 2b        shows a schematic flow chart for illustrating the method for determining a deep filter according to an embodiment;

Fig. 3          shows a schematic block diagram for a DNN architecture according to an embodiment;

Fig. 4          shows a schematic block diagram of a DNN architecture according to a further embodiment;

Figs. 5a-b    show two diagrams representing MSE results of two tests for illustrating the advantages of embodiments;

Figs. 6a-6c   schematically shows an excerpt of log-magnitude STFT spectrum for illustrating the principle and the advantages of embodiments of the present invention.

Below, embodiments of the present invention will subsequently be discussed referring to the enclosed figures, wherein identical reference numerals are provided to elements/objects having identical or similar function so that the description thereof is mutually applicable and interchangeable.

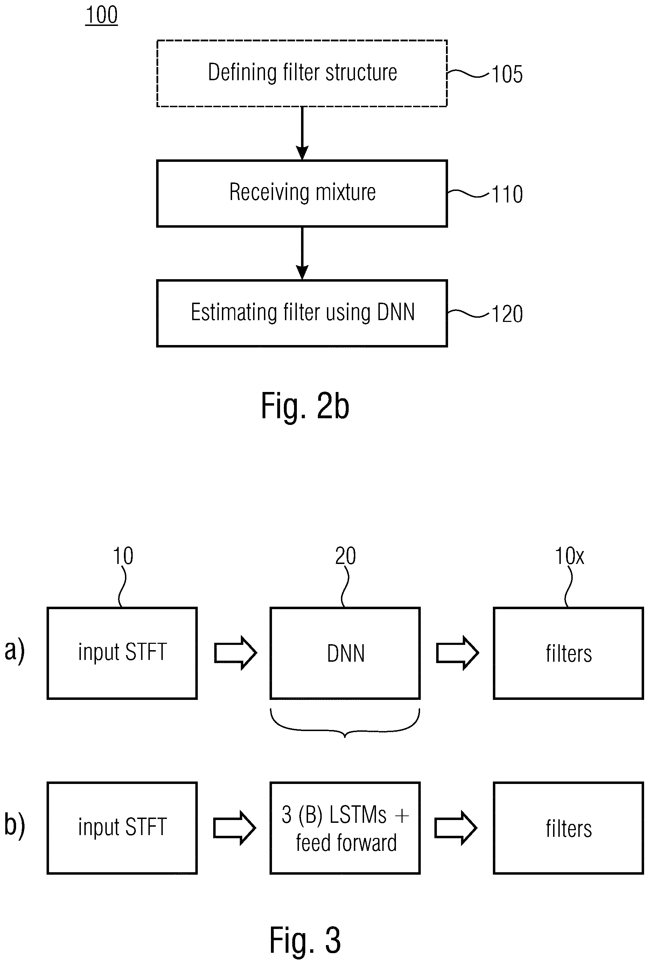

Fig. 2a shows two frequency-time diagrams, wherein the left frequency-time diagram marked by the reference numeral 10 represents the mixture received as input. Here, the mixture is an STFT (short-time Fourier transform) having a plurality of bins $s_{x,y}$. Some bins, which are marked by the reference numeral 10a, are used as input for estimating the filter, which is the aim of the method 100 described in context of Fig. 2a and 2b.

As illustrated by Fig. 2b, the method 100 comprises the two basic steps 110 and 120. The basic step 110 receives the mixture 110, as illustrated by the left diagram of Fig. 2a.

In the next step 120, the deep filter is estimated. This step 120 is illustrated by the arrows 12 mapping the marked bins 10x of the right frequency-time diagram used as extraction. The estimated filter is visualized by the crosses 10x and estimated such that the deep filter, when applying to elements of the mixture obtains an estimate of the respective element of the desired representation 11 (cf. abstraction diagram). In other words this means that the filter can be applied to a defined area of the complex input STFT to estimate the respective desired component (cf. extraction diagram).

Here, the DNN is used to estimate for each degraded tensor element $s_{x,y}$ an at least one dimensional, or preferably multi-dimensional (complex) deep filter, as it is illustrated in 10x. The filter 10x (for the degraded tensor element) is applied to defined areas 10a of the degraded tensor $s_{x,y}$ to obtain estimates of the desired values in the enhanced tensor. In this way, it is possible to overcome the problem of mask with destructive interference due to their bounded values by incorporating several tensor values for the estimates. Note, that the masks are bounded because DNN outputs are in a limited range, usually (0,1). From the theoretical point of view, a range $(0, \infty)$ would be the preferred variant to perform perfect reconstruction, wherein it has been shown practically, that the above-described limited range suffices. Due to this approach, it is possible to overcome the statistics estimation for time-frequency filters by using DNNs.

Regarding the example shown by Fig. 2a it should be noted that here a square filter is used, wherein the filter 10 is not limited to this shape. Also it should be noted that the filter 10x has two dimensions, namely a frequency dimension and a time dimension, wherein according to another embodiment it is possible that the filter 10x has just one dimension, i.e., the frequency dimension or the time dimension or another (not shown) dimension. Furthermore, it should be noted, that the filter 10a has more than the shown two dimensions, i.e., may be implemented as a multi-dimensional filter. Although the filter 10x has been illustrated as 2D complex STFT filter, another possible option is that the filter is implemented as STFT with an additional sensor dimension, i.e., not necessarily a complex filter. Alternatives are a real valued filter or quaternion-valued filter. These filters may have also a dimension of at least one, or multiple dimensions so as to form a multi-dimensional deep filter. Multi-dimensional filters provide a multi-purpose solution for a variety of different tasks (signal separation, signal reconstruction, signal extraction, noise reduction, bandwidth extension, ...). They are able to perform signal extraction and separation better than time-frequency masks (state-of-the-art). As they reduce destructive interference, they can be applied for the purpose of packet-loss-concealment or bandwidth extension which is a similar problem as destructive interference, hence, not addressable by time-frequency masks. Furthermore, they can be applied for the purpose of declipping signals.

The deep filters can be specified along different dimensions, for example time, frequency or sensor which makes it very flexible and applicable for a variety of different tasks.

In comparison to the conventional prior art, signal extraction from single-channel mixture with additional undesired signals which is most commonly performed using time/frequency (TF) masks makes clear that the complex TF filter estimated using the DNN is estimated for each mixture TF bin which maps an STFT area in the respective mixture to the desired TF bin to address destructive interference in mixture TF bins. As discussed above, the DNN may be optimized by minimizing the error between the extracted and grounded truth desired signal allowing to train without having to specify ground-truth TF filters, but learn filters by error reduction. Just for the sake of completeness, it should be noted that a conventional approach is for signal extraction from a single-channel mixture with additional undesired signals is most commonly performed using time-frequency (TF) masks. Typically, the mask is estimated with a deep neural network DNN and element-wise applied to complex mixture short-time Fourier transform (STFT) representation to perform extraction. Ideal mask magnitudes are zero for solely undesired signals in an TF bin and infinite for a total destructive interference. Usually, masks have an upper bound to provide well-defined DNN outputs at the costs of limited extraction capabilities.

Below, the design process of the filter will be discussed in more detail taking reference to Fig. 3.

Fig. 3 shows an example DNN architecture mapping the real and imaginary value of the input STFT 10 using a DNN 20 to the filter 10x (cf. Fig. 3a). According to an implementation as shown by Fig. 3b, the DNN architecture may comprise a plurality of layers, such that their mapping is performed using either three bidirectional long-short-term memory layers BLTSMS (or three long-short-term memory layers) LSTMS (both plus a feed forwarding layer with tanh activation to the real and imaginary values of the deep filters. Note, BLSTMS have an LSTM path in and in reverse time direction.

The first step is to define a problem specific filter structure. Within the method 100 (cf. Fig. 2b), this optional step is marked by the reference numeral 105. This structure design is a tradeoff between computational complexity (i.e., the more filter values the more computations are required and performance given too few filter values, for example destructive interference or data loss can play a role again, a reconstruction bound is therefore given).

The deep filters 10x are obtained by giving the mixture 10 or feature representation of it to the DNN 20. A feature representation may, for example, be the real and imaginary part of the complex mixture STFT as input 10.

As illustrated above, the DNN architecture can consist for example of a batch-normalization layer, (bidirectional) long-short term memory layers (BLSTM) and a feed-forward output layer with for example with tanh activation. The tanh activation leads to DNN output layers in [-1,1]. A concrete example is given in the appendix. If LSTMs are used instead of BLSTMS, online separation/reconstruction can be performed as a backward path in time is avoided in the DNN structure. Of course, additional layers or alternative layers may be used within the DNN architecture 10.

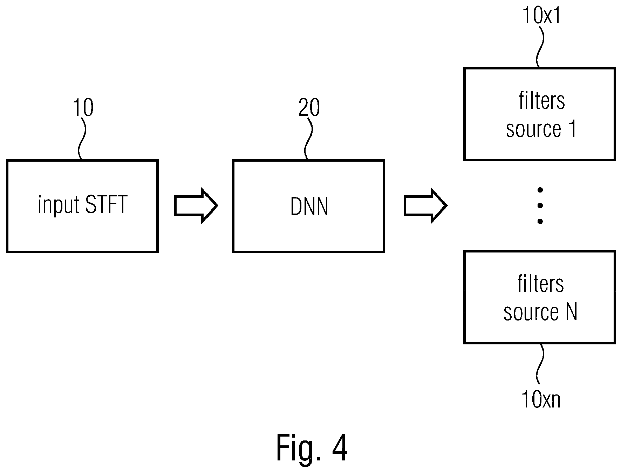

The DNN can be trained, according to a further embodiment, with the mean-squared error between the ground truth and the estimated signals given by applying the filters to the mixture. Figure 2 shows the application of an example filter which was estimated by the DNN. The red crosses in the input mark the STFT bins for which complex filter values have been estimated to estimate the corresponding STFT bin (marked by a red cross) in the extraction. There is a filter estimation for each value in the extraction STFT. Given there are N desired sources in the input STFT to be separated, the extraction process is performed for each of them individually. Filters have to be estimated for each source, e.g. with the architecture shown in Fig. 4.

Fig. 4 shows an example DNN architecture mapping the real and imaginary value of the input STFT 10 to a plurality of filters 10x1 to 10xn. Each of the filters 10x1 to 10xn is designed for different desired sources. This mapping is performed, as discussed with respect to Fig. 3 by use of the DNN 20.

According to an embodiment, the estimated/determined deep filter can be used for different applications scenarios. An embodiment provides a method for signal extraction and separation by use of a deep filter determined in accordance the above-described principle.

When one or several desired signals have to be extracted from a mixture STFT a possible filter form is a 2D rectangular filter per STFT bin per desired source to perform separation/extraction of the desired signals. Such a deep filter is illustrated in the Fig. 2a.

According to a further embodiment, the deep filter may be used for signal reconstruction. If the STFT mixture is degraded by pre-filtering (e.g. notch-filter), clipping artifacts, or parts of the desired signal(s) are missing (for example, due to packets [e.g. [9]] that are lost during transmission or narrowband transmission).

In the above cases, the desired signals have to be reconstructed using temporal and/or frequency information.

Considered scenarios have addressed reconstruction problems where STFT bins were missing either in time or frequency dimension. In context of bandwidth extension (e.g., in the case of narrowband transmission), specific STFT areas are missing (e.g., the upper frequencies). With prior knowledge about non-degraded STFT bins, it is possible to reduce the number of filters to the number of degraded STFT bins (i.e., missing upper frequencies). We can keep the rectangular filter structure but apply the deep filters to the given lower frequencies to perform bandwidth extension.

The embodiment/implementation of above embodiments describe a deep filter used for signal extraction using complex time-frequency filters. Within the below approach a comparison between the approach with complex and real valued TF masks by separating speech from a variety of different sound and noise classes from the Google AudioSet corpus is given. Here, the mixture STFT can be processed with notch filters and zero whole time-frames to demonstrate the reconstruction capability of the approach. The proposed method outperformed the baselines especially when notch filters and time-frames zeroing were applied.

Real world signals are often corrupted by undesired noise sources or interferers like white self-noise of microphones, background sounds like babble noise, or traffic, but also impulsive sounds like clapping. Preprocessing, like notch filtering, or specific room acoustics which cause spatial comb filters can also contribute to a decreased quality of the recorded signal. Extracting and/or reconstructing the desired signal from such a mixture is highly desired when high-quality signals are needed. Possible applications are for example enhancing recorded speech signals, separating different sources from each other or packet-loss concealment. Signal extraction methods can broadly be categorized in single- and multi-channel approaches. In this paper, we focus on single-channel approaches and address the problem of extracting a desired signal from a mixture of desired and undesired signals.

Common approaches perform this extraction in the short-time Fourier transform (STFT) domain, where either the desired spectral magnitude (e.g. [1]) or a time-frequency (TF) mask is estimated which then is element-wise applied to the complex mixture STFT to perform extraction. Estimating TF masks is usually preferred over directly estimating spectral magnitudes due to performance reasons [2]. Typically, TF masks are estimated from a mixture representation by a deep neural network (DNN) (e.g. [2]-[9]) where the output layer often directly yields the STFT mask. Two common approaches exist to train such DNNs. First, a ground-truth mask is defined and the DNN learns the mixture to mask mapping by minimizing an error function between the ground-truth and estimated masks (e.g. [3], [5]). In the second approach, the DNN learns the mapping by directly minimizing an error function between estimated and desired signal (e.g. [8], [10], [11]). Erdogan et al. [12] showed that direct optimization is equal to mask optimization weighted with the squared mixture magnitude. Consequently, the impact of high energy TF bins on the loss is increased and the impact of low energy decreased. Furthermore, no ground-truth mask has to be defined as it is implicitly given in the ground-truth desired signal.

For different extraction tasks, different types of TF masks have been proposed. Given a mixture in STFT domain where the signal in each TF bin either belongs solely to the desired or the undesired signal, extraction can be performed using binary masks [13] which have been used e.g. in [5], [7]. Given a mixture in STFT domain where several sources are active in the same TF bin, ratio masks (RMs) [14] or complex ratio masks (cRMs) [15] can be applied. Both assign a gain to each mixture TF bin to estimate the desired spectrum. The real-valued gains of RMs perform TF bin wise magnitude correction from mixture to desired spectrum. The estimated phase is in this case equal to the mixture phase. cRMs apply a complex instead of a real gain and additionally perform phase correction. Speaker separation, dereverberation, and denoising have been achieved using RM (e.g. [6], [8], [10], [11], [16]) and cRM (e.g. [3], [4]). Ideally, the magnitude of RMs and cRMs is zero if only undesired signals are active in a TF bin and infinity if the desired and undesired signals overlap destructively in a certain TF bin. Outputs approaching infinity cannot be estimated with a DNN. For obtaining well-defined DNN outputs, it is possible to estimate a compressed mask (e.g. [4]) with a DNN and perform extraction after decompression to obtain mask values with high magnitudes. Weak noise on the DNN output, however, can lead to a huge change in the estimated masks resulting in big errors. Furthermore, when the desired and undesired signals in a TF bin add up to zero, also a compressed mask cannot reconstruct the respective magnitude from zero by multiplication. Often, the case of destructive interference is ignored (e.g. [6], [11], [17]) and mask values bounded to one are estimated because higher values also come with the risk of noise amplification. Besides masks, also complex-valued TF filters (e.g. [18]) have been applied for the purpose of signal extraction. Current TF filter approaches usually incorporate a statistics estimation step (e.g. [18]-[21]) which can be crucial given a large variety of unknown interference signals with fast changing statistics as present in real-world scenarios.

In this paper, we propose to use a DNN to estimate a complex-valued TF filter for each TF-bin in the STFT domain to address extraction also for highly non-stationary signals with unknown statistics. The filter is element-wise applied to a defined area in the respective mixture STFT. The result is summed up to obtain an estimate of the desired signal in the respective TF bin. The individual complex filter values are bounded in magnitude to provide well-defined DNN outputs. Each estimated TF bin is a complex weighted sum of a TF bin area in the complex mixture. This allows to address the case of destructive interference in a single TF bin without the noise-sensitivity of mask compression. It also allows to reconstruct a TF bin which is zero by taking into account neighboring TF bins with non-zero magnitudes. The combination of DNNs and TF filters mitigates both the shortcomings of TF masks and of existing TF filter approaches.

The paper is structured as follows. In Section II, we present the signal extraction process with TF masks and subsequently, in Section III, we describe our proposed method. Section IV contains the data sets we used and Section V the results of the experiments to verify our theoretical considerations

Starting from this extraction, the STFT mask based extraction is performed. The extraction processed with TF mask is described, while providing implementation details of the masks used as baselines in the performance evaluation.

A. Objective

We define the complex single-channel spectrum of the mixture as $X(n, k)$, of the desired signal as $X_d(n, k)$, and of the undesired signal as $X_u(n, k)$ in STFT domain where n is the time-frame and k is the frequency index. We consider the mixture $X(n, k)$ to be a superposition

$$X(n, k) = X_u(n, k) + X_d(n, k). \tag{1}$$

Our objective is to obtain an estimate of $X_d(n, k)$ by applying a mask to $X(n, k)$ to be a superposition

$$\widehat{X}_d(n, k) = \widehat{M}(n, k) \cdot X(n, k), \tag{2}$$

where $\hat{X}_d(n,k)$ is the estimated desired signal and $\hat{M}(n, k)$ the estimated TF mask. For a binary mask, $\hat{M}(n, k)$ is $\in \{0, 1\}$, for a RM $\hat{M}(n, k)$ is $\in [0, b]$ with the upper-bound $b \in \mathbb{R}^+$, and for a cRM $|\hat{M}(n, k)|$ is $\in [0, b]$ and $\hat{M}(n, k)$ is $\in \mathbb{C}$. The upper-bound b is typically one or close to one. Binary masks classify TF bins, RMs perform magnitude correction and cRMs additionally perform phase correction from

X(n, k) to $\hat{X}_d(n, k)$. Addressing the extraction problem is in this case equal to addressing the mask estimation problem.

Usually, TF masks are estimated with a DNN which is either optimized to estimate a predefined ground-truth TF mask for all N · K TF bins, where N is the total number of time-frames and K the number of frequency bins per time-frame

$$J_{\mathrm{M}} = \frac{1}{N \cdot K} \sum_{k=1}^{K} \sum_{n=1}^{N} |M(n,k) - \widehat{M}(n,k)|^2,$$

(3)

with the ground-truth mask M(n, k), or to reduce the recon-$X_d$(n, k) and $\hat{X}_d(n, k)$

$$J_{\mathrm{R}} = \frac{1}{N \cdot K} \sum_{k=1}^{K} \sum_{n=1}^{N} |(X_d(n,k) - \widehat{X}_d(n,k))^2|,$$

(4)

or the magnitude reconstruction

$$J_{\mathrm{MR}} = \frac{1}{N \cdot K} \sum_{k=1}^{K} \sum_{n=1}^{N} (|X_d(n,k)| - |\widehat{X}_d(n,k)|)^2.$$

(5)

Optimizing the reconstruction error is equivalent to a weighted optimization of the masks reducing the impact of TF bins with low energy and increasing the impact of high energy TF bins on the loss [12]. For destructive interference in (1), the well-known triangle inequality given by

$$|X_d(n,k) + X_u(n,k)| < |X_d(n,k)| < |X_d(n,k)| + |X_u(n,k)|,$$

(6)

holds, requiring 1 < |M(n, k)| ≤ ∞. Hence, the global optimum cannot be reached above the mask upper-bound b.

*B. Implementation*

For mask estimation, we use a DNN with a batch-norm layer followed by three bidirectional long short-term memory (BLSTM) layers [22] with *1200* neurons per layer and a feed-forward output layer with tanh activation yielding the output O with dimension *(N, K, 2)* representing an imaginary and real output per TF bin ∈ *[-1, 1]*.

For mask estimation, we designed the model to have the same number of trainable parameters and the same maximum of $|\hat{M}|$ for the RM and cRM approaches. We used a real-valued DNN with the stacked imaginary and real part of *X* as input and two outputs, defined as $O_r$ and $O_l$, per TF bin. These can be interpreted as imaginary and real mask components. For RM estimation, we computed $\widehat{M}(n,k) = \sqrt{O_r(n,k)^2 + O_l(n,k)^2}$ resulting in $\hat{M}(n,k) \in [0, \sqrt{2}]$. For the cRM *Re* {$\hat{M}(n,k)$}} = $O_r$(n, k) and *Im*{$\hat{M}(n,k)$} magnitude between *1* and *√2*, where *1* is achieved for a $O_l$(n, k). This setting yields a phase dependent maximal cRM pure real or imaginary mask value and √2 for |$O_r$(n, k)| = |$O_l$(n, k)| =*1* resulting in an amplification disadvantage of the cRM compared to the RM. We trained two DNNs to estimate a RM optimized with (5) and a cRM optimized with (4).We computed the complex multiplication of *X(n, k)* and $\hat{M}(n, k)$ in (2) for the cRM by

$$Re\{X_d\} = Re\{M\} \cdot Re\{X\} - Im\{M\} \cdot Im\{X\},$$

(7)

$$Im\{\widehat{X}_\mathrm{d}\} = Im\{\widehat{M}\} \cdot Re\{X\} + Re\{\widehat{M}\} \cdot Im\{X\}. \quad (8)$$

Note that (n, k) is omitted for brevity. We trained 100 epochs, used the Adam [23] optimizer, a dropout [24] of 0.4 in the BLSTMs, a batch size of 64, an initial learning rate of 1e-4 multiplied by 0.9 after each episode the validation loss did not decrease.

Below, the improved approach of the proposed STFT filter based extraction will be discussed. Here, especially it will be shown how to estimate $x_\mathrm{d}$ using an STFT domain filter instead of TF masks. It is referred to this filter as deep filter (DF).

A. Objective

We propose to obtain $\widehat{X}_\mathrm{d}$ from $X$ by applying a complex filter

$$\widehat{X}_\mathrm{d}(n,k) = \sum_{i=-I}^{I} \sum_{l=-L}^{L} H_{n,k}^*(l+L, i+I) \cdot X(n-l, k-i),$$

$$(9)$$

where $2 \cdot L + 1$ is the filter dimension in time-frame direction and $2 \cdot I + 1$ in frequency direction and $H_{n,k}^*$ is the complex conjugated 2D filter of TF bin (n, k). Note that, without loss of generality, we used in (9) a square filter only for reasons of presentation simplicity. The filter values are like mask values bound in magnitude to provide well-defined DNN outputs

$$|H_{n,k}^*(l+L, i+I)| \leqslant b \ \forall l, i \in \mathbb{N} : l, i \in [-L, L], [-I, I]. \quad (10)$$

The DNN is optimized according to (4) which allows training without having to define ground-truth filters (GTFs) and to directly optimize the reconstruction mean squared error (MSE). The decision for GTFs is crucial because there are usually infinitely many combinations of different filter values that lead to the same extraction result. If a GTF was selected randomly for a TF bin from the set of infinitely many GTFs, training would fail because there would not be consistency between the selected filters. We can interpret this situation as a partially observable process for the GTF designer and fully observable for the DNN. From the input data properties, the DNN can decide exactly which filter to take without ambiguities. The GTF designer has an infinitely large set of possible GTFs but cannot interpret the input data to decide which GTF to take so that the current DNN update is consistent with regard to the previous updates. By training with (4), we avoid the problem of GTF selection.

B. Implementation

We used the same DNN as proposed in Section II-B changing the output shape to (N, K, 2, 2 · L + 1, 2 · I + 1), where the last 2 entries are the filter dimensions. The complex multiplication in (9) was performed as shown in (7) and (8). In our experiments, we set $L = 2$ and $I = 1$ resulting in a filter the maximum of $|H_{n,k}(l, i)|$ is phase dependent $\in$ $[1, \sqrt{2}]$ for dimension of (5, 3). Similar as for cRMs in Subsection II-B, the employed output layer activation. As all $|H_{n,k}(l, i)|$ can be at least 1, a DNN can theoretically optimize (4) to its global optimum zero, if

$$c \cdot \sum_{i=-I}^{I} \sum_{l=-L}^{L} |X(n-l, k-i)| \geqslant |X_\mathrm{d}(n,k)|,$$

$$(11)$$

where $c \in \mathbb{R}^+$ is the maximal magnitude all filter values can reach and with c = 1 in our setting. Hence, to address destructive interference, the summation of all mixture magnitudes considered by a filter weighted with c must be at least equal to the desired TF bin magnitude. As filters exceed the spectrum for TF bins at the edge, we zero padded the spectrum with L zeros on time and I on frequency axis.

IV. DATA SETS

We used the AudioSet [25] as interferer (without the speech samples) and LIBRI [26] as desired speech data corpora. All data was down-sampled to 8 kHz sampling frequency and had a duration of 5 s. For the STFT we set the hop size to 10 ms, the frame length to 32 ms, and used the Hann window. Consequently, in our tests $K = 129$ and $N = 501$.

We degraded the desired speech samples by adding white noise, interference from AudioSet, notch-filtering and random time-frame zeroing (T-kill). Each degradation was applied to a sample with a probability of *50* percent. For the AudioSet interference, we randomly selected five seconds of AudioSet and desired speech from LIBRI to compute one training sample. Speech and interference were mixed with a segmental signal-to-noise-ratio (SNR) $\in$ *[0, 6]* dB, speech and white noise with SNR $\in$ *[20, 30]* dB. For notch-filtering, we randomly selected a center frequency with a quality factor $\in$ *[10, 40]*. When T-kill was applied, every time-frame was zeroed with a probability of 10 percent. We generated 100000 training, 5000 validation and 50000 test samples using the respective sets of LIBRI and with the aforementioned degradations. To avoid overfitting, training, validation and test samples were created from distinct speech and interference samples from AudioSet and LIBRI. We divided the test samples in three subsets, namely Test 1, Test 2, and Test 3. In Test 1, speech was solely degraded by interference from AudioSet. In Test 2, speech was only degraded by both, notch-filtering and T-kill. In Test 3, speech was degraded by interference, notch-filtering, and T-kill simultaneously. All subsets include samples with and without white noise.

D. PERFORMANCE EVALUATION

For performance evaluation, we used the signal-to-distortion-ratio (SDR), the signal-to-artifacts-ratio (SAR), the signal-to-interference-ratio (SIR) [27], the reconstruction MSE (see (4)), the short-time objective intelligibility (STOI) [28], [29], and the test data set.

First, we tested how clean speech is degraded when processed. The MSEs after RM, cRM, and DF application were -33.5, -30.7, and -30.2 dB, respectively. The errors are very small and we assume them to be caused by noise on the DNN outputs. RMs produce the smallest MSE as noise on the DNN outputs solely affects the magnitude, then cRMs as phase and magnitude is affected and finally, DFs introduce the highest MSE. In an informal listening test, no difference was perceived. Table I shows the average results of Test 1 - 3. In Test 1, DFs, cRMs and RMs showed to generalize well to unseen interference. Processing with cRMs instead of RMs did not result in performance improvements although cRMs

TABLE I: Average Results SDR, SIR, SAR, MSE (in dB), STOI for RM, cRM, and DF for test samples degraded with AudioSet interference in Test 1, with a notch-filter and a time-frame zeroing (T-kill) in Test 2, and the combination in Test 3; unpr. MSE 1.60, -7.80, 1.12 and STOI 0.81, 0.89, 0.76 for Test 1, 2, 3, respectively

| Test 1: Interference | | | | | |
|---|---|---|---|---|---|
| | MSE | STOI | SDR | SAR | SIR |
| RM | -10.23 | **.86** | 15.09 | 15.81 | 25.55 |
| cRM | -10.20 | .85 | 15.06 | 15.78 | 26.30 |
| Proposed DF | **-10.83** | .86 | **15.67** | **16.44** | **26.59** |

| Test 2: T-kill and Notch | | | | | |
|---|---|---|---|---|---|
| | MSE | STOI | SDR | SAR | SIR |
| RM | -7.80 | .89 | 12.25 | 12.39 | 29.50 |
| cRM | -7.80 | .89 | 12.25 | 12.45 | 27.40 |
| Proposed DF | **-18.63** | .94 | **26.37** | **27.40** | **34.16** |

| Test 3: Interference, T-kill, and Notch | | | | | |
|---|---|---|---|---|---|
| | MSE | STOI | SDR | SAR | SIR |
| RM | -6.00 | .82 | 9.81 | 10.04 | 24.73 |
| cRM | -5.94 | .81 | 9.77 | 10.15 | 25.20 |
| Proposed DF | **-9.94** | .85 | **14.77** | **15.21** | **26.21** |

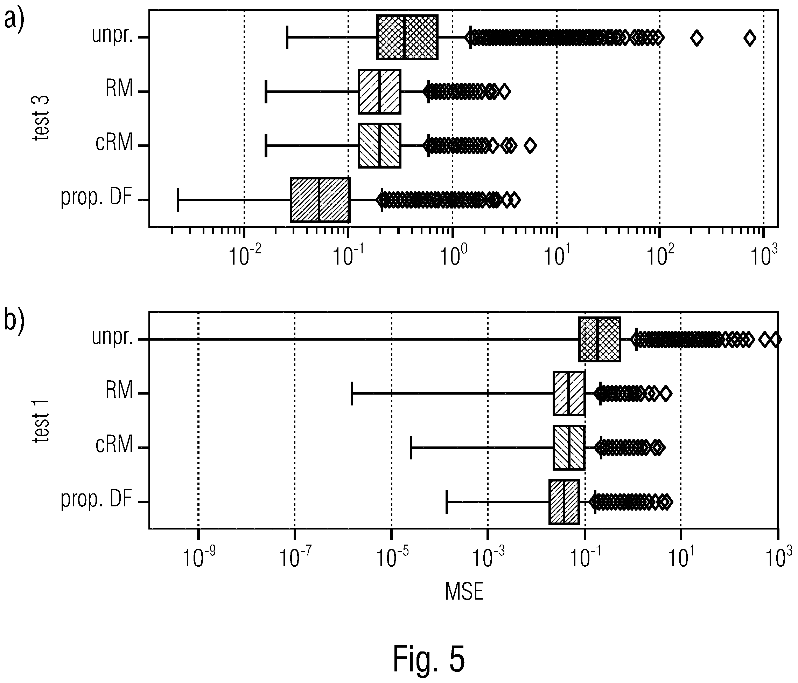

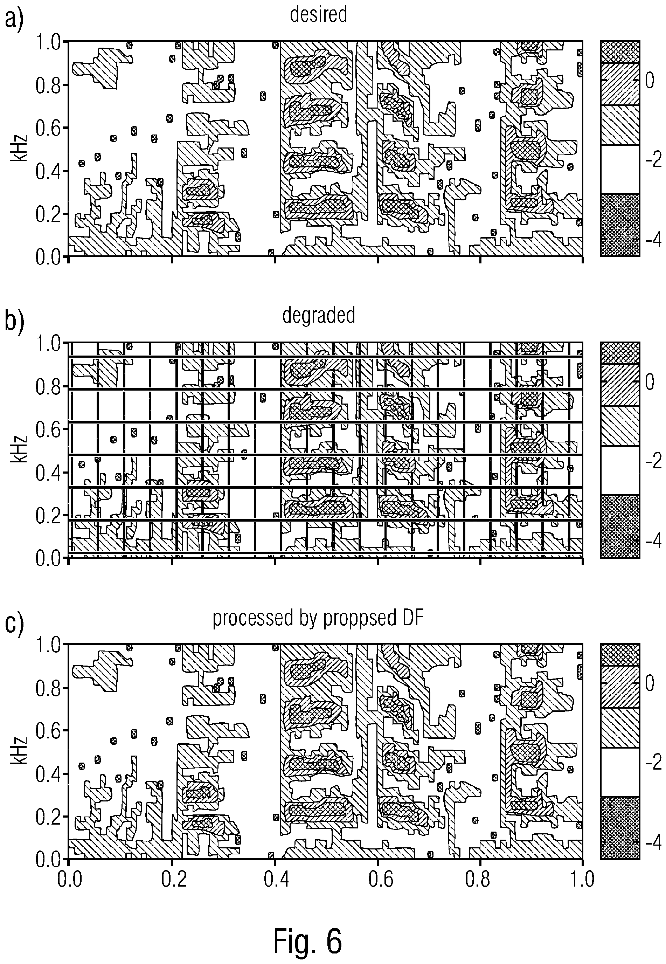

perform phase in addition to magnitude correction. This can result from the amplification disadvantage of cRMs compared to RMs caused by the employed DNN architecture described in Subsection II-B. For the metric STOI, DFs and RMs performed on par whereas for the other metrics DFs performed better and achieved a further improvement of 0.61 dB in SDR. Boxplots of the MSE results are depicted in Fig. 5. We assume this to be caused by the advanced reconstruction capabilities of DFs with respect to destructive interference. In Test 2, DFs clearly outperformed cRMs and RMs as expected because the test conditions provided a comparable scenario to destructive interference. Fig. 6 depicts log-magnitude spectra of clean speech, degraded speech by zeroing every fifth time-frame and frequency axis and after enhancement with DF. The degradation in this Fig. 6 was performed for illustration purposes only unlike the random time-frame zeroing in the data sets. Traces of the grid are still visible in low but not in high energy spectral regions as focused on by the loss in (4). In Test 3, DFs performed best as they are able to address all degradations whereas RMs and cRMs cannot. The baselines cRMs and RMs performed on par.

**[0072]** The conclusion is the following:
We extended the concept of time-frequency masks for signal extraction to complex filters to increase the interference reduction and decrease the signal distortion, and to address destructive interference of desired and undesired signals. We proposed to estimate the filters with a deep neural network which is trained by minimizing the MSE between the desired and estimated signal and avoids defining ground-truth filters for training which would be crucial due to the necessity to consistently define filters for network training given infinity many possibilities. The filter and the mask methods were able to perform speech extraction given unknown interference signals from AudioSet which shows their generalizability and introduced only a very small error when processing clean speech. Our approach outperformed a complex ratio mask in all and a ratio mask baseline in all but one metric where the performance was on par. Beside interference reduction, we tested whether data loss simulated by time-frame zeroing or filtering with notch filters can be addressed and showed that solely our proposed method was able to reconstruct the desired signal. Hence, with deep filters, signal extraction and/or reconstruction seems to be feasible under very adverse conditions given packet-loss, or unknown interference.

As discussed above, the above-described approach may be performed by a computer, i.e., an embodiment, refers to a computer program performing one of the above-described methods. Analogously, the approach may be performed by using an apparatus.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, some one or more of the most important method steps may be executed by such an apparatus.

The inventive encoded audio signal can be stored on a digital storage medium or can be transmitted on a transmission medium such as a wireless transmission medium or a wired transmission medium such as the Internet.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or non-transitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

References

[01] J. Le Roux and E. Vincente, "Consistent Wiener filtering for audio source separation," IEEE Signal Processing Letters, pp. 217-220, March 2013.

[02] B. Jacob, J. Chen and E. A. P. Habets, Speech enhancement in the STFT domain, Springer Science & Business Media., 2011.

[03] T. Virtanen, "Monaural sound source separation by nonnegative matrix factorization with temporal continuity and sparseness criteria," IEEE TRANS. ON AUDIO, SPEECH, AND LANGUAGE PROCES., pp. 1066-1074, February 2007.

[04] F. Weninger, J. L. Roux, J. R. Hershey and S. Watanabe, "Discriminative NMF and its application to single-channel source separation," In Fifteenth Annual Conf. of the Intl. Speech Commun. Assoc., September 2014.

[05] D. Wang and J. Chen, "Supervised speech separation based on deep learning: An overview," Proc. IEEE Intl. Conf. on Acoustics, Speech and Signal Processing (ICASSP), pp. 1702 - 1726, May 2018.

[06] J. R. Hershey, Z. Chen, J. L. Roux and S. Watanabe, "Deep clustering: Discriminative embeddings for segmentation and separation," Proc. IEEE Intl. Conf. on Acoustics, Speech and Signal Processing (ICASSP), pp. 31-35, March 2016.

[07] Y. Dong, M. Kolbaek, Z. H. Tan and J. Jensen, "Permutation invariant training of deep models for speaker-independent multi-talker speech separation," Proc. IEEE Intl. Conf. on Acoustics, Speech and Signal Processing (ICASSP), pp. 241-245, March 2017.

[08] D. S. Williamson and D. Wang, "Speech dereverberation and denoising using complex ratio masks," Proc. IEEE Intl. Conf. on Acoustics, Speech and Signal Processing (ICASSP), pp. 5590-5594, March 2017.

[09] J. Lecomte et al., "Packet-loss concealment technology advances in EVS," Proc. IEEE Intl. Conf. on Acoustics, Speech and Signal Processing (ICASSP), pp. 5708-5712, August 2015.

[1] K. Han, Y. Wang, D. Wang, W. S. Woods, I. Merks, and T. Zhang, "Learning spectral mapping for speech dereverberation and denoising," IEEE/ACM Trans. Audio, Speech, Lang. Process., vol. 23, no. 6, pp. 982-992, June 2015.

[2] Y. Wang, A. Narayanan, and D. Wang, "On training targets for supervised speech separation," IEEE/ACM Trans. Audio, Speech, Lang. Process., vol. 22, no. 12, pp. 1849-1858, December 2014.

[3] D. S. Williamson, Y. Wang, and D. Wang, "Complex ratio masking for monaural speech separation," IEEE Trans. Audio, Speech, Lang. Process., vol. 24, no. 3, pp. 483-492, March 2016.

[4] D. S. Williamson and D. Wang, "Speech dereverberation and denoising using complex ratio masks," in Proc.

IEEE Intl. Conf. on Acoustics, Speech and Signal Processing (ICASSP), March 2017, pp. 5590-5594.

[5] J. R. Hershey, Z. Chen, J. L. Roux, and S. Watanabe, "Deep clustering: Discriminative embeddings for segmentation and separation," in Proc. IEEE Intl. Conf. on Acoustics, Speech and Signal Processing (ICASSP), March 2016, pp. 31-35.

[6] Z. Chen, Y. Luo, and N. Mesgarani, "Deep attractor network for single-microphone speaker separation," in Proc. IEEE Intl. Conf. on Acoustics, Speech and Signal Processing (ICASSP), March 2017, pp. 246-250.

[7] Y. Isik, J. L. Roux, Z. Chen, S. Watanabe, and J. R. Hershey, "Single-channel multi-speaker separation using deep clustering," in Proc. Inter-speech Conf., September 2016, pp. 545-549.

[8] D. Yu, M. Kolbæk, Z. H. Tan, and J. Jensen, "Permutation invariant training of deep models for speaker-independent multi-talker speech separation," in Proc. IEEE Intl. Conf. on Acoustics, Speech and Signal Processing (ICASSP), March 2017, pp. 241-245.

[9] Y. Luo, Z. Chen, J. R. Hershey, J. L. Roux, and N. Mesgarani, "Deep clustering and conventional networks for music separation: Stronger together," in Proc. IEEE Intl. Conf. on Acoustics, Speech and Signal Processing (ICASSP), March 2017, pp. 61-65.

[10] M. Kolbaek, D. Yu, Z.-H. Tan, J. Jensen, M. Kolbaek, D. Yu, Z.-H. Tan, and J. Jensen, "Multitalker speech separation with utterance-level permutation invariant training of deep recurrent neural networks," IEEE Trans. Audio, Speech, Lang. Process., vol. 25, no. 10, pp. 1901-1913, October 2017.

[11] W. Mack, S. Chakrabarty, F.-R. Stöter, S. Braun, B. Edler, and E. A. P. Habets, "Single-channel dereverberation using direct MMSE optimization and bidirectional LSTM networks," in Proc. Interspeech Conf., September 2018, pp. 1314-1318.

[12] H. Erdogan and T. Yoshioka, "Investigations on data augmentation and loss functions for deep learning based speech-background separation," in Proc. Interspeech Conf., September 2018, pp. 3499-3503.

[13] D. Wang, "On ideal binary mask as the computational goal of audi-tory scene analysis," in Speech Separation by Humans and Machines, P. Divenyi, Ed. Kluwer Academic, 2005, pp. 181-197.

[14] C. Hummersone, T. Stokes, and T. Brookes, "On the ideal ratio mask as the goal of computational auditory scene analysis," in Blind Source Separation, G. R. Naik and W. Wang, Eds. Springer, 2014, pp. 349- 368.

[0] F. Mayer, D. S. Williamson, P. Mowlaee, and D. Wang, "Impact of phase estimation on single-channel speech separation based on time-frequency masking," J. Acoust. Soc. Am., vol. 141, no. 6, pp. 4668-4679, 2017.

[1] F. Weninger, H. Erdogan, S. Watanabe, E. Vincent, J. Roux, J. R. Hershey, and B. Schuller, "Speech enhancement with LSTM recurrent neural networks and its application to noise-robust ASR," in Proc. of the 12th Int. Conf. on Lat.Var. An. and Sig. Sep., ser. LVA/ICA. New York, USA: Springer-Verlag, 2015, pp. 91-99.

[2] X. Li, J. Li, and Y. Yan, "Ideal ratio mask estimation using deep neural networks for monaural speech segregation in noisy reverberant conditions," August 2017, pp. 1203-1207.

[3] J. Benesty, J. Chen, and E. A. P. Habets, Speech Enhancement in the STFT Domain, ser. SpringerBriefs in Electrical and Computer Engineering. Springer-Verlag, 2011.

[4] J. Benesty and Y. Huang, "A single-channel noise reduction MVDR filter," in Proc. IEEE Intl. Conf. on Acoustics, Speech and Signal Processing (ICASSP), 2011, pp. 273-276.

[5] D. Fischer, S. Doclo, E. A. P. Habets, and T. Gerkmann, "Com-bined single-microphone Wiener and MVDR filtering based on speech interframe correlations and speech presence probability," in Speech Communication; 12. ITG Symposium, Oct 2016, pp. 1-5.

[6] D. Fischer and S. Doclo, "Robust constrained MFMVDR filtering for single-microphone speech enhancement," in Proc. Intl. Workshop Acoust. Signal Enhancement (IWAENC), 2018, pp. 41-45.

[7] S. Hochreiter and J. Schmidhuber, "Long short-term memory," Neural Computation, vol. 9, no. 8, pp. 1735-1780, Nov 1997.

[8] J. B. D. Kingma, "Adam: A method for stochastic optimization," in Proc. IEEE Intl. Conf. on Learn. Repr. (ICLR), May 2015, pp. 1-15.

[9] N. Srivastava, G. Hinton, A. Krizhevsky, I. Sutskever, and R. Salakhutdinov, "Dropout: A simple way to prevent neural networks from overfitting," J. Mach. Learn. Res., vol. 15, no. 1, pp. 1929-1958, January 2014. [Online]. Available: http://dl.acm.org/citation.cfm?id=2627435.2670313

[10] J. F. Gemmeke, D. P. W. Ellis, D. Freedman, A. Jansen, W. Lawrence, R. C. Moore, M. Plakal, and M. Ritter, "Audio Set: An ontology and human-labeled dataset for audio events," in Proc. IEEE Intl. Conf. on Acoustics, Speech and Signal Processing (ICASSP), March 2017, pp. 776-780.

[11] V. Panayotov, G. Chen, D. Povey, and S. Khudanpur, "Librispeech: An ASR corpus based on public domain audio books," in Proc. IEEE Intl. Conf. on Acoustics, Speech and Signal Processing (ICASSP), April 2015, pp. 5206-5210.

[12] C. Raffel, B. McFee, E. J. Humphrey, J. Salamon, O. Nieto, D. Liang, and D. P. W. Ellis, "MIR EVAL: A transparent implementation of common MIR metrics," in Intl. Soc. of Music Inf. Retrieval, October 2014, pp. 367-372.

[13] C. H. Taal, R. C. Hendriks, R. Heusdens, and J. Jensen, "An algorithm for intelligibility prediction of time-frequency weighted noisy speech," IEEE Trans. Audio, Speech, Lang. Process., vol. 19, no. 7, pp. 2125- 2136, September 2011.

[14] M. Pariente, "pystoi," https://github.com/mpariente/pystoi, 2018.

**Claims**

1.  A method (100) for determining a deep filter (10x) of at least one-dimension, comprising:

    receiving (110) a mixture (10);
    estimating (120) using a deep neural network the deep filter (10x), wherein the estimating (120) is performed, such that the deep filter (10x), when applying to elements of the mixture (10), obtains estimates of respective elements of the desired representation (11),
    wherein the deep filter (10x) of at least one dimension comprises a tensor with elements ($s_{x,y}$).

2.  The method (100) according to claim 1, wherein the mixture (10) comprises a real- or complex-valued time-frequency presentation or a feature representation of it; and wherein the desired representation (11) comprises a desired real- or complex-valued time-frequency presentation or a feature representation of it.

3.  The method (100) according to one of the previous claims, wherein the deep filter (10x) comprises a real- or complex-valued time-frequency filter; and/or wherein the deep filter (10x) of at least one dimension is described in the short-time Fourier transform domain.

4.  The method (100) according to one of the previous claims, wherein the step of estimating (120) is performed for each element of the mixture (10) or for a predetermined portion of the elements of the mixture (10).

5.  The method (100) according to one of the previous claims, wherein the estimating (120) is performed for at least two sources.

6.  The method (100) according to one of the previous claims, further comprising the step of defining a filter structure with its filter variables for the deep filter (10x) of at least one dimension.

7.  The method (100) according to one of the previous claims, wherein the deep neural network comprises a number of output parameters equal to the number of filter values of a filter function of the deep filter (10x).

8. The method (100) according to one of the previous claims, wherein the at least one dimension are out of a group comprising time, frequency and sensor, or
wherein the at least one of the dimensions is across time or frequency.

9. The method (100) according to one of the previous claims, wherein the deep neural network comprises a batch-normalization layer, a bidirectional long short-term memory layer, a feed-forward output layer with a tanh activation and/or one or more additional layer.

10. The method (100) according to one of the previous claims, further comprising the step of training the deep neural network.

11. The method (100) according to claim 10, wherein the deep neural network is trained by optimizing of the mean squared error between a ground truth of the desired representation (11) and an estimate of the desired representation (11) ; or
wherein the deep neural network is trained by reducing the reconstruction error between the desired representation (11) and an estimate of the desired representation (11) ; or
wherein the training is performed by a magnitude reconstruction.

12. The method (100) according to one of the previous claims, wherein the estimating (120) is performed by use of the formula:

$$\hat{X}_d(n,k) = \sum_{i=-I}^{I} \sum_{l=-L}^{L} H_{n,k}^{*}(l+L, i+I) \cdot X(n-l, k-i) \quad ,$$

wherein $2 \cdot L + 1$ is a filter dimension in the time-frame direction and $2 \cdot I + 1$ is a filter dimension in a frequency direction and $H_{n,k}^{*}$ is the complex conjugated 1D or 2D filter.

13. The method (100) according to claim 10, 11 or 12, wherein the training is performed by use of the following formula:

$$J_R = \frac{1}{N \cdot K} \sum_{k=1}^{K} \sum_{n=1}^{N} \left| \left( X_d(n,k) - \hat{X}_d(n,k) \right)^2 \right| \quad ,$$

wherein $X_d(n, k)$ is the desired representation (11) and $\hat{X}_d(n, k)$ the estimated desired representation (11), or by use of the following formula:

$$J_{MR} = \frac{1}{N \cdot K} \sum_{k=1}^{K} \sum_{n=1}^{N} (|X_d(n,k)| - |\hat{X}_d(n,k)|^2 | \quad ,$$

wherein $X_d(n, k)$ is the desired representation (11) and $\hat{X}_d(n, k)$ is the estimated desired representation (11) .

14. The method (100) according to one of the previous claims, wherein the tensor elements ($s_{x,y}$) of the deep filter (10x) are bounded in magnitude or bounded in magnitude by use of the following formula:

$$|H_{n,k}^{*}(l+L, i+I)| \leq b \; \forall l, i \in [-L, L], [-I, I] \quad ,$$

wherein $H_{n,k}^{*}$ is a complex conjugated 2D filter.

15. A method (100) for filtering comprising the steps of the method (100) as defined by one of the claims 1 to 14 as well as the following steps:
applying the deep filter (10x) to the mixture (10).

**16.** A method (100) according to claim 15, wherein the step of applying is performed element-wise.

**17.** The method (100) according to claim 15 or 16, wherein the applying is performed by summing up to obtain an estimate of the desired representation (11) in a respective tensor element ($s_{x,y}$).

**18.** The use of the method (100) according to one of claims 15 to 17 for signal extraction or for signal separation of at least two sources.

**19.** The use of the method (100) according to one of claims 15 to 17 for signal reconstruction.

**20.** Computer program for performing, when running on a computer, one of the methods according to one of claims 1 to 19.

**21.** An apparatus for determining a deep filter (10x), the apparatus comprising
an input for receiving (110) a mixture (10);
a deep neural network for estimating (120) the deep filter (10x) such that the deep filter (10x), when applying to elements of the mixture (10), obtains estimates of respective elements of the desired representation (11);
wherein the deep filter (10x) of at least one dimension comprises a tensor with elements ($s_{x,y}$).

Fig. 1

Fig. 2a

<u>100</u>

Fig. 2b

Fig. 3

10x1

filters
source 1

10

input STFT

20

DNN

filters
source N

10xn

Fig. 4

Fig. 5

Fig. 6

Europäisches
Patentamt
European
Patent Office
Office européen
des brevets

## EUROPEAN SEARCH REPORT

Application Number

EP 19 16 9585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/284346 A1 (VISSER ERIK [US] ET AL) 29 September 2016 (2016-09-29)<br><br>* paragraphs [0018], [0024], [0025], [0037], [0038], [0042], [0044] *<br>* figure 3 *<br>* claims 1-3 * | 1-9, 12-16, 18-21 | INV.<br>G10L21/0272<br><br>ADD.<br>G10L25/30 |
| X | US 2019/005976 A1 (PELEG SHMUEL [IL] ET AL) 3 January 2019 (2019-01-03)<br>* paragraphs [0004], [0011] - [0014], [0045], [0046], [0057] * | 1,10,11, 20,21 | |
| X | SAINATH TARA N ET AL: "Speaker location and microphone spacing invariant acoustic modeling from raw multichannel waveforms", 2015 IEEE WORKSHOP ON AUTOMATIC SPEECH RECOGNITION AND UNDERSTANDING (ASRU), IEEE, 13 December 2015 (2015-12-13), pages 30-36, XP032863568, DOI: 10.1109/ASRU.2015.7404770 [retrieved on 2016-02-10]<br>* abstract *<br>* section 2 *<br>* figure 1 * | 1,17,20, 21 | |
| X | US 2018/068675 A1 (VARIANI EHSAN [US] ET AL) 8 March 2018 (2018-03-08)<br>* paragraphs [0010], [0031] - [0035], [0053], [0057], [0063], [0096], [0131] *<br>* claims 1-3 * | 1,20,21 | TECHNICAL FIELDS SEARCHED (IPC)<br><br>G10L<br>G06K<br>H03H<br>G01S<br>A61B |

-/--

The present search report has been drawn up for all claims

| Place of search | Date of completion of the search | Examiner |
|---|---|---|
| Munich | 10 October 2019 | Geißler, Christian |

Europäisches
Patentamt

European
Patent Office

Office européen
des brevets

# EUROPEAN SEARCH REPORT

**Application Number**

EP 19 16 9585

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUXUAN WANG ET AL: "On training targets for supervised speech separation", IEEE/ACM TRANSACTIONS ON AUDIO, SPEECH, AND LANGUAGE PROCESSING, IEEE, USA, vol. 22, no. 12, 1 December 2014 (2014-12-01), pages 1849-1858, XP058065950, ISSN: 2329-9290, DOI: 10.1109/TASLP.2014.2352935 * abstract * * page 1849, right-hand column, last paragraph * * section II, first paragraph; page 1850 * * section III, last paragraph; page 1852 * * section V.B, first paragraph; page 1854 * | 1,20,21 | |
| X | TARA N SAINATH ET AL: "Learning the Speech Front-end with Raw Waveform CLDNNs", PROCEEDINGS INTERSPEECH 2015, DRESDEN, GERMANY , 6 September 2015 (2015-09-06), pages 1-5, XP002761544, Retrieved from the Internet: URL:http://static.googleusercontent.com/media/research.google.com/en//pubs/archive/43960.pdf * page 1, left-hand column, last paragraph * * section 4.5 * | 1,20,21 | **TECHNICAL FIELDS SEARCHED (IPC)** |

-/--

The present search report has been drawn up for all claims

| Place of search | Date of completion of the search | Examiner |
|---|---|---|
| Munich | 10 October 2019 | Geißler, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 19 16 9585

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BO LI ET AL: "Neural Network Adaptive Beamforming for Robust Multichannel Speech Recognition", PROC. INTERSPEECH, ISCA (2016), , 8 September 2016 (2016-09-08), XP002767154, Retrieved from the Internet: URL:http://www.ee.columbia.edu/~ronw/pubs/interspeech2016-waveform_cldnn_adaptive.pdf [retrieved on 1077] * page 1, right-hand column * * section 3.2.1 * ----- | 1,20,21 | |
| X | STYLIANOS IOANNIS MIMILAKIS ET AL: "Examining the Mapping Functions of Denoising Autoencoders in Music Source Separation", ARXIV.ORG, CORNELL UNIVERSITY LIBRARY, 201 OLIN LIBRARY CORNELL UNIVERSITY ITHACA, NY 14853, 12 April 2019 (2019-04-12), XP081168535, * abstract * * section 3, first paragraph; page 5 * ----- | 1,20,21 | |
| X | US 2017/092265 A1 (SAINATH TARA N [US] ET AL) 30 March 2017 (2017-03-30) * paragraphs [0034], [0043] * ----- | 1,20,21 | |
| X | US 2017/278513 A1 (LI BO [US] ET AL) 28 September 2017 (2017-09-28) * paragraphs [0027], [0028], [0057], [0072], [0079], [0084], [0085] * ----- | 1,20,21 | |
| X | US 6 820 053 B1 (RUWISCH DIETMAR [DE]) 16 November 2004 (2004-11-16) * column 3, line 54 - line 67 * ----- | 1,20,21 | |

| | | |
|---|---|---|
| | | TECHNICAL FIELDS SEARCHED (IPC) |

The present search report has been drawn up for all claims

| Place of search | Date of completion of the search | Examiner |
|---|---|---|
| Munich | 10 October 2019 | Geißler, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 726 529 A1

## ANNEX TO THE EUROPEAN SEARCH REPORT
## ON EUROPEAN PATENT APPLICATION NO.

EP 19 16 9585

10-10-2019

| Patent document cited in search report | | Publication date | Patent family member(s) | | Publication date |
|---|---|---|---|---|---|
| US 2016284346 | A1 | 29-09-2016 | NONE | | |
| US 2019005976 | A1 | 03-01-2019 | US 2019005976 A1 | | 03-01-2019 |
| | | | WO 2019008580 A1 | | 10-01-2019 |
| US 2018068675 | A1 | 08-03-2018 | US 2018068675 A1 | | 08-03-2018 |
| | | | US 2019259409 A1 | | 22-08-2019 |
| US 2017092265 | A1 | 30-03-2017 | NONE | | |
| US 2017278513 | A1 | 28-09-2017 | CN 108463848 A | | 28-08-2018 |
| | | | EP 3381033 A1 | | 03-10-2018 |
| | | | JP 6480644 B1 | | 13-03-2019 |
| | | | JP 2019508730 A | | 28-03-2019 |
| | | | KR 20180095886 A | | 28-08-2018 |
| | | | US 2017278513 A1 | | 28-09-2017 |
| | | | US 2018197534 A1 | | 12-07-2018 |
| | | | WO 2017164954 A1 | | 28-09-2017 |
| US 6820053 | B1 | 16-11-2004 | AT 289110 T | | 15-02-2005 |
| | | | CA 2319995 A1 | | 06-04-2001 |
| | | | DE 19948308 A1 | | 19-04-2001 |
| | | | EP 1091349 A2 | | 11-04-2001 |
| | | | TW 482993 B | | 11-04-2002 |
| | | | US 6820053 B1 | | 16-11-2004 |

EPO FORM P0459

For more details about this annex : see Official Journal of the European Patent Office, No. 12/82

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Non-patent literature cited in the description

- **J. LE ROUX ; E. VINCENTE.** Consistent Wiener filtering for audio source separation. *IEEE Signal Processing Letters,* March 2013, 217-220
- **B. JACOB ; J. CHEN ; E. A. P. HABETS.** Speech enhancement in the STFT domain. Springer Science & Business Media, 2011
- **T. VIRTANEN.** Monaural sound source separation by nonnegative matrix factorization with temporal continuity and sparseness criteria. *IEEE TRANS. ON AUDIO, SPEECH, AND LANGUAGE PROCES.,* February 2007, 1066-1074
- **F. WENINGER ; J. L. ROUX ; J. R. HERSHEY ; S. WATANABE.** Discriminative NMF and its application to single-channel source separation. *Fifteenth Annual Conf. of the Intl. Speech Commun. Assoc.,* September 2014
- **D. WANG ; J. CHEN.** Supervised speech separation based on deep learning: An overview. *Proc. IEEE Intl. Conf. on Acoustics, Speech and Signal Processing (ICASSP),* May 2018, 1702-1726
- **J. R. HERSHEY ; Z. CHEN ; J. L. ROUX ; S. WATANABE.** Deep clustering: Discriminative embeddings for segmentation and separation. *Proc. IEEE Intl. Conf. on Acoustics, Speech and Signal Processing (ICASSP),* March 2016, 31-35
- **Y. DONG ; M. KOLBAEK ; Z. H. TAN ; J. JENSEN.** Permutation invariant training of deep models for speaker-independent multi-talker speech separation. *Proc. IEEE Intl. Conf. on Acoustics, Speech and Signal Processing (ICASSP),* March 2017, 241-245
- **D. S. WILLIAMSON ; D. WANG.** Speech dereverberation and denoising using complex ratio masks. *Proc. IEEE Intl. Conf. on Acoustics, Speech and Signal Processing (ICASSP),* March 2017, 5590-5594
- **J. LECOMTE et al.** Packet-loss concealment technology advances in EVS. *Proc. IEEE Intl. Conf. on Acoustics, Speech and Signal Processing (ICASSP),* August 2015, 5708-5712
- **K. HAN ; Y. WANG ; D. WANG ; W. S. WOODS ; I. MERKS ; T. ZHANG.** Learning spectral mapping for speech dereverberation and denoising. *IEEE/ACM Trans. Audio, Speech, Lang. Process.,* June 2015, vol. 23 (6), 982-992
- **Y. WANG ; A. NARAYANAN ; D. WANG.** On training targets for supervised speech separation. *IEEE/ACM Trans. Audio, Speech, Lang. Process.,* December 2014, vol. 22 (12), 1849-1858
- **D. S. WILLIAMSON ; Y. WANG ; D. WANG.** Complex ratio masking for monaural speech separation. *IEEE Trans. Audio, Speech, Lang. Process.,* March 2016, vol. 24 (3), 483-492
- **Z. CHEN ; Y. LUO ; N. MESGARANI.** Deep attractor network for single-microphone speaker separation. *Proc. IEEE Intl. Conf. on Acoustics, Speech and Signal Processing (ICASSP),* March 2017, 246-250
- **Y. ISIK ; J. L. ROUX ; Z. CHEN ; S. WATANABE ; J. R. HERSHEY.** Single-channel multi-speaker separation using deep clustering. *Proc. Inter-speech Conf.,* September 2016, 545-549
- **D. YU ; M. KOLBÆK ; Z. H. TAN ; J. JENSEN.** Permutation invariant training of deep models for speaker-independent multi-talker speech separation. *Proc. IEEE Intl. Conf. on Acoustics, Speech and Signal Processing (ICASSP),* March 2017, 241-245
- **Y. LUO ; Z. CHEN ; J. R. HERSHEY ; J. L. ROUX ; N. MESGARANI.** Deep clustering and conventional networks for music separation: Stronger together. *Proc. IEEE Intl. Conf. on Acoustics, Speech and Signal Processing (ICASSP),* March 2017, 61-65
- **M. KOLBAEK ; D. YU ; Z.-H. TAN ; J. JENSEN ; M. KOLBAEK ; D. YU ; Z.-H. TAN ; J. JENSEN.** Multi-talker speech separation with utterance-level permutation invariant training of deep recurrent neural networks. *IEEE Trans. Audio, Speech, Lang. Process.,* October 2017, vol. 25 (10), 1901-1913
- **W. MACK ; S. CHAKRABARTY ; F.-R. STÖTER ; S. BRAUN ; B. EDLER ; E. A. P. HABETS.** Single-channel dereverberation using direct MMSE optimization and bidirectional LSTM networks. *Proc. Interspeech Conf.,* September 2018, 1314-1318
- **H. ERDOGAN ; T. YOSHIOKA.** Investigations on data augmentation and loss functions for deep learning based speech-background separation. *Proc. Interspeech Conf.,* September 2018, 3499-3503
- On ideal binary mask as the computational goal of audi-tory scene analysis. **D. WANG.** Speech Separation by Humans and Machines. Kluwer Academic, 2005, 181-197
- On the ideal ratio mask as the goal of computational auditory scene analysis. **C. HUMMERSONE ; T. STOKES ; T. BROOKES.** Blind Source Separation. Springer, 2014, 349-368

- **F. MAYER ; D. S. WILLIAMSON ; P. MOWLAEE ; D. WANG.** Impact of phase estimation on single-channel speech separation based on time-frequency masking. *J. Acoust. Soc. Am.,* 2017, vol. 141 (6), 4668-4679
- Speech enhancement with LSTM recurrent neural networks and its application to noise-robust ASR. **F. WENINGER ; H. ERDOGAN ; S. WATANABE ; E. VINCENT ; J. ROUX ; J. R. HERSHEY ; B. SCHULLER.** Proc. of the 12th Int. Conf. on Lat.Var. An. and Sig. Sep., ser. LVA/ICA. Springer-Verlag, 2015, 91-99
- **X. LI ; J. LI ; Y. YAN.** *Ideal ratio mask estimation using deep neural networks for monaural speech segregation in noisy reverberant conditions,* August 2017, 1203-1207
- Speech Enhancement in the STFT Domain, ser. **J. BENESTY ; J. CHEN ; E. A. P. HABETS.** SpringerBriefs in Electrical and Computer Engineering. Springer-Verlag, 2011
- **J. BENESTY ; Y. HUANG.** A single-channel noise reduction MVDR filter. *Proc. IEEE Intl. Conf. on Acoustics, Speech and Signal Processing (ICASSP),* 2011, 273-276
- **D. FISCHER ; S. DOCLO ; E. A. P. HABETS ; T. GERKMANN.** Com-bined single-microphone Wiener and MVDR filtering based on speech interframe correlations and speech presence probability. *Speech Communication; 12. ITG Symposium,* October 2016, 1-5
- **D. FISCHER ; S. DOCLO.** Robust constrained MFMVDR filtering for single-microphone speech enhancement. *Proc. Intl. Workshop Acoust. Signal Enhancement (IWAENC),* 2018, 41-45
- **S. HOCHREITER ; J. SCHMIDHUBER.** Long short-term memory. *Neural Computation,* November 1997, vol. 9 (8), 1735-1780
- **J. B. D. KINGMA.** Adam: A method for stochastic optimization. *Proc. IEEE Intl. Conf. on Learn. Repr. (ICLR),* May 2015, 1-15
- **N. SRIVASTAVA ; G. HINTON ; A. KRIZHEVSKY ; I. SUTSKEVER ; R. SALAKHUTDINOV.** Dropout: A simple way to prevent neural networks from overfitting. *J. Mach. Learn. Res.,* January 2014, vol. 15 (1), 1929-1958, http://dl.acm.org/citation.cfm?id=2627435.2670313
- **J. F. GEMMEKE ; D. P. W. ELLIS ; D. FREEDMAN ; A. JANSEN ; W. LAWRENCE ; R. C. MOORE ; M. PLAKAL ; M. RITTER.** Audio Set: An ontology and human-labeled dataset for audio events. *Proc. IEEE Intl. Conf. on Acoustics, Speech and Signal Processing (ICASSP),* March 2017, 776-780
- Librispeech: An ASR corpus based on public domain audio books. **V. PANAYOTOV ; G. CHEN ; D. POVEY ; S. KHUDANPUR.** Proc. IEEE Intl. Conf. on Acoustics, Speech and Signal Processing (ICASSP). April 2015, 5206-5210
- **C. RAFFEL ; B. MCFEE ; E. J. HUMPHREY ; J. SALAMON ; O. NIETO ; D. LIANG ; D. P. W. ELLIS.** MIR EVAL: A transparent implementation of common MIR metrics. *Intl. Soc. of Music Inf. Retrieval,* October 2014, 367-372
- **C. H. TAAL ; R. C. HENDRIKS ; R. HEUSDENS ; J. JENSEN.** An algorithm for intelligibility prediction of time-frequency weighted noisy speech. *IEEE Trans. Audio, Speech, Lang. Process.,* September 2011, vol. 19 (7), 2125-2136
- **M. PARIENTE.** *pystoi,* 2018, https://github.com/mpariente/pystoi